# EUROPEAN PATENT APPLICATION

(11) **EP 4 339 217 A1**
(43) Date of publication of application: **20.03.2024**
(21) Application number: 22195275.7
(22) Date of filing: 13.09.2022
(51) Int. Cl.: C08G 18/28, C08G 65/336, C08L 83/04, C09D 183/04, C09J 183/04

(54) **CURABLE SILICONE COMPOSITIONS CONTAINING ADDITIVES**

(71) Applicant: Henkel AG & Co. KGaA, 40589 Düsseldorf (DE)
(72) Inventor: Geitner, Felix, 40822 Mettmann (DE); Gutacker, Andrea, 40764 Langenfeld (DE); Duracu, Adrian, 40589 Düsseldorf (DE)

(57) **Abstract**

The invention relates to curable compositions based on polyorganosiloxanes with silicon-containing terminal groups, a polymer having at least one silane-functional group, and optionally at least one curing catalyst. The invention also relates to adhesive, sealant, and/or coating materials comprising said composition and the use of said composition.

## Description

The invention relates to curable compositions based on polyorganosiloxanes with silicon-containing terminal groups, a polymer having at least one silane-functional group and optionally a curing catalyst. These compositions have improved adhesion properties. The invention also relates to adhesive, sealant, and/or coating materials comprising said composition and the use of said composition.

Polymer systems which possess reactive crosslinkable silyl groups, for example alkoxysilyl groups, have long been known. In the presence of atmospheric moisture these alkoxysilane-terminated polymers are able to condense with elimination of the alkoxy groups. Depending on the amount of alkoxysilane groups and their structure, mainly long-chain polymers (thermoplastics), relatively wide-meshed three-dimensional networks (elastomers) or highly crosslinked systems (thermosets) form.

Silicone polymers (polyorganosiloxanes), particularly polydialkylsiloxanes such as polydimethylsiloxane (PDMS), have great importance in the production of adhesive, sealing, coating, and insulation materials. Among these, those that vulcanize at low temperatures and under ambient conditions constitute a significant share of the market. Typical formulations contain a reactive polyorganosiloxane, in particular a silanol-terminated polyorganosiloxane having at least one, preferably two hydroxy groups bound to a silicon atom. It is typically used in combination with a silane-based crosslinker which has hydrolysable groups such as alkoxy groups bound to the silicon atom as described in, for example EP 0 564 253 A1. While the polyorganosiloxane and crosslinker can be present as separate components, both can also be reacted with each other to form a modified polyorganosiloxane which can then be used in a curable composition. The term endcapping (end group capping) is also used in this regard. This can be carried out optionally in the presence of a catalyst, whereby the catalyst is to mediate the endcapping selectively without simultaneously curing the polyorganosiloxane.

The uses and possible applications of such silane-terminated polyorganosiloxane systems are equally diverse. They can, for example be used for the production of elastomers, sealants, adhesives, elastic adhesive systems, rigid and flexible foams, a wide variety of coating systems and in the medical field, for example, for impression materials in dentistry. These products can be applied in any form, such as painting, spraying, casting, pressing, filling and the like.

Numerous crosslinkers that act as endcapping or functionalizing moieties for the respective polymer backbone are known in the art. Besides their functionality used for coupling to the polymer backbone, these can be differentiated into acidic, basic, and neutral crosslinkers based on the type of leaving groups released during hydrolysis. Typical acidic crosslinkers contain acid groups as hydrolysable groups and release the corresponding acids, e.g., acetic acid, during the crosslinking. Typical basic crosslinkers release amines during the crosslinking. Typical representatives of neutral crosslinkers have hydrolysable groups, which release alcohols or oximes during the crosslinking, such as methanol or ethanol.

Although the above-described polyorganosiloxane-based compositions are associated with many advantages, the resulting formulations sometimes suffer from only moderate adhesion on certain challenging substrates.

While some formulations that address some of these issues exist, it is an object of the present invention to provide alternative curable compositions based on polyorganosiloxanes which have a good adhesion on various substrates including PMMA.

The present invention achieves said object by providing curable compositions based on polyorganosiloxanes endcapped with silane groups, whereby the compositions contain at least one additional polymer having at least one silane-functional group and optionally at least one curing catalyst.

It has been found that the combination of the silyl-terminated polyorganosiloxanes and special additives disclosed herein provides for good curing and improved adhesion properties.

In a first aspect, the present invention therefore relates to a curable composition comprising or consisting essentially of:
(A) at least one polyorganosiloxane containing at least one terminal group of the general formula (I):

   -Si(R¹)ₘ(Y)₃₋ₘ (I),

   wherein each R¹ is independently selected from a hydrocarbon radical containing 1 to 20 C atoms or a triorganosiloxy group of formula -O-Si(R²)₃, where each R² is independently selected from a hydrocarbon radical containing 1 to 20 C atoms;
   each Y is independently selected from a hydroxy group or a hydrolysable group selected from the group consisting of a hydrogen atom, a halogen atom, an alkoxy group, an acyloxy group, an oximo group, an acetoxy group, an amino group, an amide group, an acid amide group, an aminoxy group, a mercapto group, and an alkenyloxy group; and,
   m is 0, 1, or 2;
(B) at least one polymer having at least one silane-functional group of the general formula (II)

   -Xₒ-R-Si(R^{a})ₖ(R^{b})₃₋ₖ (II),

   wherein
   X is a divalent linking group containing at least one heteroatom;
   R is selected from divalent hydrocarbon residues having 1 to 12 carbon atoms;
   each R^{a} is, independently of one another, selected from a hydrocarbon radical containing 1 to 20 carbon atoms and each R^{b} is, independently of one another, selected from a hydroxyl group or a hydrolysable group, wherein R^{a} and R^{b} are substituents directly bound with the Si atom or the two of the substituents R^{a} and R^{b} form a ring together with the Si atom to which they are bound;
   k is 0, 1, or 2; and
   o is 0 or 1; and
(C) optionally, at least one curing catalyst.

In another aspect, the invention relates to an adhesive, sealant, or coating material comprising the curable composition of the invention.

The invention further relates to the use of a curable composition of the invention as an adhesive, sealant, or coating material.

A "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In the context of the present invention, "curable" predominantly relates to the property of the terminal silane groups of formula (I) to condensate.

Provided reference is made to molecular weights of oligomers or polymers in the present application, the quantities, unless otherwise stated, refer to the weight average, i.e., the M_{w} value, and not to the number average molecular weight. The molecular weight is determined by gel permeation chromatography (GPC) with tetrahydrofuran (THF) as the eluent according to DIN 55672-1:2007-08, preferably at 35°C. Molecular weights of monomeric compounds are calculated based on the respective molecular formula and the known molecular weights of the individual atoms.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

All percentage data, provided in connection with the compositions described herein, referto % by weight, based in each case on the relevant mixture, unless explicitly indicated otherwise.

"Consisting essentially of", as used herein, means that the respective composition is composed mainly, i.e. by at least 50% by weight, for example at least 60, 70 or 80 %, of the referenced component, e.g. in case of the inventive compositions listed components (A) and (B) and optionally (C) and optionally other additives such as plasticizers, as described below.

"About", as used herein in relation to numerical values means the referenced value ±10%, preferably ±5%.

"Alkyl," as used herein, refers to a saturated aliphatic hydrocarbon including straight-chain and branched-chain groups. The alkyl group preferably has 1 to 10 carbon atoms (if a numerical range, e.g., "1-10" is given herein, this means that this group, in this case the alkyl group, can have 1 carbon atom, 2 carbon atoms, 3 carbon atoms, etc., up to and including 10 carbon atoms). In particular, the alkyl can be an intermediate alkyl, which has 5 to 6 carbon atoms, or a lower alkyl, which has 1 to 4 carbon atoms, e.g., methyl, ethyl, n-propyl, isopropyl, butyl, isobutyl, tert-butyl, etc. The alkyl groups can be substituted or unsubstituted. "Substituted," as used in this connection, means that one or more carbon atoms and/or hydrogen atom(s) of the alkyl group are replaced by heteroatoms or functional groups. Functional groups that can replace the hydrogen atoms are selected particularly from =O, =S, -OH, -SH, -NH₂, -N(C₁₋₁₀ alkyl)₂, such as -N(CH₃)₂, -NO₂, -CN, -F, -CI, -Br, -I, -COOH, -CONH₂, -OCN, -NCO, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur. Substituted alkyl includes, for example, alkylaryl groups. Heteroalkyl groups in which 1 or more carbon atoms are replaced by heteroatoms, particularly selected from O, S, N, and Si, are obtained by the replacement of one or more carbon atoms by heteroatoms, preferably the carbon being replaced not being the one linking the group to the rest of the molecule. Examples of such heteroalkyl groups are, without limitation, methoxymethyl, ethoxyethyl, propoxypropyl, methoxyethyl, isopentoxypropyl, ethylaminoethyl, trimethoxypropylsilyl, etc.

"Alkoxy" refers to an alkyl group, as defined herein, that is linked via an -O- to the rest of the molecule. The respective term thus includes groups, such as methoxy and ethoxy.

"Alkenyl," as used herein, refers to an alkyl group, as defined herein, which consists of at least two carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be substituted or unsubstituted. If they are substituted, the substituents are as defined above for alkyl. "Alkenyloxy" refers to an alkenyl group, as defined herein, that is linked via an -O- to the rest of the molecule. The respective term thus includes enoxy groups, such as vinyloxy (H₂C=CH-O-).

"Alkynyl," as used herein, refers to an alkyl group, as defined herein, which consists of at least two carbon atoms and at least one carbon-carbon triple bond, e.g., ethynyl (acetylene), propynyl, butynyl, or pentynyl and structural isomers thereof as described above. Alkynyl groups can be substituted or unsubstituted. If they are substituted, the substituents are as defined above for alkyl. "Alkynyloxy" refers to an alkynyl group, as defined herein, that is linked via an -O- to the rest of the molecule.

A "cycloaliphatic group" or "cycloalkyl group," as used herein, refers to monocyclic or polycyclic groups (a number of rings with carbon atoms in common), particularly of 3-8 carbon atoms, in which the ring does not have a completely conjugated pi-electron system, e.g., cyclopropyl, cyclobutyl, cyclopentyl, cyclohexyl, cyclobutenyl, cyclopentenyl, cyclohexenyl, etc. Cycloalkyl groups can be substituted or unsubstituted. "Substituted," as used in this regard, means that one or more hydrogen atoms of the cycloalkyl group are replaced by functional groups. Functional groups that can replace the hydrogen atoms are selected particularly from =O, =S, -OH, -SH, -NH₂, -NO₂, -CN, -F, -CI, -Br, -I, -COOH, -CONH₂, -OCN, -NCO, C₁₋₁₀ alkyl, C₂₋₁₀ alkenyl, C₂₋₁₀ alkynyl, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur. "Cycloalkyloxy" refers to a cycloalkyl group, as defined herein, that is linked via an -O- to the rest of the molecule.

"Aryl," as used herein, refers to monocyclic or polycyclic groups (i.e., rings that have neighboring carbon atoms in common), particularly of 6 to 14 carbon ring atoms which have a completely conjugated pi-electron system. Examples of aryl groups are phenyl, naphthalenyl, and anthracenyl. Aryl groups can be substituted or unsubstituted. If they are substituted, the substituents are as defined above for cycloalkyl. "Aryloxy" refers to an aryl group, as defined herein, that is linked via an -O- to the rest of the molecule.

A "heteroaryl" group, as used herein, refers to a monocyclic or polycyclic (i.e., rings that share an adjacent ring atom pair) aromatic ring, having particularly 5 to 10 ring atoms, where one, two, three, or four ring atoms are nitrogen, oxygen, or sulfur and the rest is carbon. Examples of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, phthalazinyl, quinoxalinyl, cinnolinyl, naphthyridinyl, quinolyl, isoquinolyl, tetrazolyl, 5,6,7,8-tetrahydroquinolyl, 5,6,7,8-tetrahydroisoquinolyl, purinyl, pteridinyl, pyridinyl, pyrimidinyl, carbazolyl, xanthenyl, or benzoquinolyl. Heteroaryl groups can be substituted or unsubstituted. If they are substituted, the substituents are as defined above for cycloalkyl. "(Hetero)aryl", as used herein, refers to both aryl and heteroaryl groups as defined herein. "Heteroaryloxy" refers to a heteroaryl group, as defined herein, that is linked via an -O- to the rest of the molecule.

A "heteroalicyclic group" or a "heterocycloalkyl group," as used herein, refers to a monocyclic or fused ring having 5 to 10 ring atoms, which contains one, two, or three heteroatoms, selected from N, O, and S, whereby the rest of the ring atoms are carbon. A "heterocycloalkenyl" group contains in addition one or more double bonds. The ring however has no completely conjugated pi-electron system. Examples of heteroalicyclic groups are pyrrolidinone, piperidine, piperazine, morpholine, imidazolidine, tetrahydropyridazine, tetrahydrofuran, thiomorpholine, tetrahydropyridine, and the like. Heterocycloalkyl groups can be substituted or unsubstituted. If they are substituted, the substituents are as defined above for cycloalkyl. "Heteroalicyclic" refers to a heteroalicyclic group, as defined herein, that is linked via an - O- to the rest of the molecule.

Combinations of the afore-mentioned groups include, for example, alkylaryl or arylalkyl groups and the like. In such combinations each of the respective group may be substituted or unsubstituted, as defined above.

The curable compositions of the invention contain as component (A) at least one polyorganosiloxane containing at least one terminal silane group of the general formula (I) as defined herein.

The polyorganosiloxane (A) contains at least one terminal group of the general formula (I):

-Si(R¹)ₘ(Y)₃₋ₘ (I),

wherein each R¹ is independently selected from a hydrocarbon radical containing 1 to 20 C atoms or a triorganosiloxy group of formula -O-Si(R²)₃, where each R² is independently selected from a hydrocarbon radical containing 1 to 20 C atoms;
each Y is independently selected from a hydroxy group or a hydrolysable group selected from the group consisting of a hydrogen atom, a halogen atom, an alkoxy group, an acyloxy group, an oximo group, an acetoxy group, an amino group, an amide group, an acid amide group, an aminoxy group, a mercapto group, and an alkenyloxy group; and,
m is 0, 1, or 2.

In preferred embodiments, R¹ is selected from an alkyl, alkenyl, alkynyl, cycloalkyl, aryl, or aralkyl group containing 1 to 20 C atoms, more preferably selected from an alkyl group containing 1 to 10 C atoms, an alkenyl group containing 2 to 10 C atoms, aryl containing 6 to 20 C atoms, or an aralkyl group containing 7 to 20 C atoms.

Examples of R¹ in general formula (I) described above include a methyl group, an ethyl group, a cyclohexyl group, a vinyl group, a phenyl group, a benzyl group, and a trimethylsiloxy group.

In preferred embodiments, Y is independently selected from an alkoxy, an oximo, or an acetoxy group, more preferably an alkoxy or oximo group. If multiple Y radicals are contained, these may be the same or different.

The term "oximo group" as used herein includes ketoximes, such as methyl ethyl ketoxime group, dimethyl ketoxime group, methyl propyl ketoxime group, methyl isobutyl ketoxime group, and methyl isopropyl ketoxime group, and aldoximes.

In preferred embodiments, m is 0 or 1, more preferably m is 1.

In various embodiments, one polymer molecule in each case contains two or more of the above-described terminal groups of the general formula (I).

The polyorganosiloxanes may be linked to the terminal groups of formula (I) via a variety of different linking groups -A-. In various embodiments, the linking group -A- is a direct covalent bond, -O-, oxyalkylene, such as -O-CH₂- or -O-(CH₂)₃- or a linear or branched divalent group selected from siloxane-alkylene, preferably of the formula -(CH₂)₁₋₁₀-(Si(Alk)₂-O-Si(Alk)₂)₁₋₁₀-(CH₂)₁₋₁₀, or a derivative thereof, with Alk being C₁₋₁₀ alkyl, preferably methyl. If -A- is a siloxane-alkylene of the formula -(CH₂)₁₋₁₀-(Si(Alk)₂-O-Si(Alk)₂)₁₋₁₀-(CH₂)₁₋₁₀, it is preferably selected from -(CH₂)₂-Si(CH₃)₂-O-Si(CH₃)₂-(CH₂)₂-.

Alternatively, in various embodiments, the polyorganosiloxanes may be linked to the terminal groups of formula (I) via a moiety selected from -O-C(=O)-NH-, -NH-C(=O)O- , -NH-C(=O)-NH-, -NR'-C(=O)-NH-, -NH-C(=O)-NR'- , -NH-C(=O)-, -C(=O)-NH -, -C(=O)-O-, -O-C(-O)-, -O-C(=O)-O-, -S-C(=O)-NH- , -NH-C(=O)-S- , -C(=O)-S-, -S-C(=O)-, -S-C(=O)-S- , -C(=O)-, -S-, -O-, and -NR'-, wherein R' can be hydrogen or a hydrocarbon moiety with 1 to 6 carbon atoms, optionally substituted with halogen, preferably C₁-C₂ alkyl or hydrogen. In such embodiments, -A- may consist of the afore-mentioned groups optionally further connected to a bivalent alkylene group having 1 to 10 carbon atoms, optionally interrupted by a heteroatom, that may be substituted, preferably -CH₂- or -(CH₂)₃-. If such alkylene group is present, the orientation is such that the alkylene group connects to the silicon atom of the terminal group of formula (I) while the above-listed functional groups connect to a terminal silicon atom of the polymer chain, i.e., the full linker-A- could be -O-C(=O)-NH-C₁₋₁₀ alkylene- or -O-C₁₋₁₀ alkylene-.

In preferred embodiments, the polyorganosiloxane (A) is obtainable by reacting a polyorganosiloxane having at least one terminal reactive group A' (la) which may be reacted with a suitable silane crosslinker that yields the desired polymer (A). The silane crosslinker has the formula (lb)

C-Si(R¹)ₘ(Y)₃₋ₘ (Ib),

wherein C is a reactive group that reacts with the terminal reactive group A'; and,
R¹, Y, and m are the same as defined for the general formula (I).

In preferred embodiments, the terminal reactive group A' is selected from a hydroxy, amino, or isocyanate group, more preferably A' is a hydroxy group. In preferred embodiments, the polyorganosiloxane has at least two terminal hydroxy groups bound to silicon atoms, i.e., at each end of the polyorganosiloxane if the polyorganosiloxane is linear. If the polyorganosiloxane is branched, it preferably has a hydroxy group at each end. Accordingly, while the invention covers polymers that have the silane group of formula (I) only on one end, it is preferred that all polymer chain ends are end-capped by said groups, i.e., a linear polymer would thus have two terminal silane groups of the formula (I). If the polymer is branched, it is preferred that each end is end-capped with the groups of the formula (I).

The polyorganosiloxane which has at least one terminal reactive group A', preferably hydroxy group, is preferably a polydiorganosiloxane, preferably a polydimethylsiloxane (PDMS). Preferably, an α,ω-dihydroxy-terminated polydiorganosiloxane, particularly an α,ω-dihydroxy-terminated polydimethylsiloxane is used as the polyorganosiloxane which has at least one terminal hydroxy group. Particularly preferred are α,ω-dihydroxy-terminated polydimethylsiloxanes, which have a kinematic viscosity at 25°C of 5000 to 120,000 cSt, particularly 10,000 to 100,000 cSt, and particularly preferably 50,000 to 90,000 cSt.

In preferred embodiments, the reactive group C is a leaving group, more preferably a leaving group identical to Y. In preferred embodiments, C is a leaving group, preferably selected from an alkoxy, oximo, or acetoxy group, more preferably selected from an alkoxy or oximo group, that upon reaction with the terminal reactive group A' of the polyorganosiloxane (la) yields the linker group -A-.

In preferred embodiments, the silane crosslinker is selected from silane compounds having alkoxy, oximo, or acetoxy group(s), more preferably alkoxy or oximo group(s).

Suitable silane crosslinkers having alkoxy groups include, without limitation, methyltrimethoxysilane, ethyltrimethoxysilane, propyltrimethoxysilane, vinyltrimethoxysilane, phenyltrimethoxysilane, methyltriethoxysilane, ethyltriethoxysilane, propyltriethoxysilane, vinyltriethoxysilane, phenyltriethoxysilane, and mixtures thereof.

Suitable silane crosslinkers having oximo groups include, without limitation, methyltris(acetonoximo)silane, ethyltris(acetonoximo)silane, propyltris(acetonoximo)silane, vinyltris(acetonoximo)silane, phenyltris(acetonoximo)silane, tetra(acetonoximo)silane, methyltris(methylethylketoximo)silane, ethyltris(methylethylketoximo)silane, propyltris(methylethylketoximo)silane, vinyltris(methylethylketoximo)silane, phenyltris(methylethylketoximo)silane, tetra(methylethylketoximo)silane, methyltris(methylpropylketoximo)silane, ethyltris(methylpropylketoximo)silane, propyltris(methylpropylketoximo)silane, vinyltris(methylpropylketoximo)silane, phenyltris(methylpropylketoximo)silane, tetra(methylpropylketoximo)silane, methyltris(methylisopropylketoximo)silane, ethyltris(methylisopropylketoximo)silane, propyltris(methylisopropylketoximo)silane, vinyltris(methylisopropylketoximo)silane, phenyltris(methylisopropylketoximo)silane, tetra(methylisopropylketoximo)silane, methyltris(methylisobutylketoximo)silane, ethyltris(methylisobutylketoximo)silane, propyltris(methylisobutylketoximo)silane, vinyltris(methylisobutylketoximo)silane, phenyltris(methylisobutylketoximo)silane, tetra(methylisobutylketoximo)silane, and mixtures thereof.

Suitable silane crosslinkers having acetoxy groups include, without limitation, methyltriacetoxysilane, ethyltriacetoxysilane, propyltriacetoxysilane, vinyltriacetoxysilane, phenyltriacetoxysilane, tetraacetoxysilane, and mixtures thereof.

Suitable reactions are known and are also called endcapping. These can be carried out optionally in the presence of a catalyst, whereby the catalyst is to mediate the endcapping selectively without simultaneously curing the polyorganosiloxane. Suitable catalysts are, for example, acids, organic lithium compounds, as they are described, for example, in EP 0 564 253 A1, amines, inorganic oxides, potassium acetate, organotitanium derivatives, titanium/amine combinations, and carboxylic acid/amine combinations.

In various embodiments, the curable compositions contain the polyorganosiloxane (A) in an amount of about 15 to 90% by weight, particularly preferably in an amount of about 20 to 70% by weight, based in each case on the total weight of the composition. If a mixture of polyorganosiloxanes is used, the amounts relate to the total amount of polyorganosiloxanes in the composition. If such a mixture is used, only one of the polyorganosiloxanes may be a polyorganosiloxane as described herein. It is however preferred that essentially all, i.e., at least 50 wt.-%, preferably at least 70 or 80 wt.-%, of the polyorganosiloxanes used in the composition are those described herein.

The compositions of the invention crosslink in the presence of moisture and in so doing cure with the formation of Si-O-Si bonds.

The curable compositions further comprise as an essential component (B) at least one polymer having at least one silane-functional group of the general formula (II)

-Xₒ-R-Si(R^{a})ₖ(R^{b})₃₋ₖ (II),

wherein
X is a divalent linking group containing at least one heteroatom;
R is selected from divalent hydrocarbon residues having 1 to 12 carbon atoms;
each R^{a} is, independently of one another, selected from a hydrocarbon radical containing 1 to 20 carbon atoms and each R^{b} is, independently of one another, selected from a hydroxyl group or a hydrolysable group, wherein R^{a} and R^{b} are substituents directly bound with the Si atom or the two of the substituents
R^{a} and R^{b} form a ring together with the Si atom to which they are bound;
k is 0, 1, or 2; and
o is 0 or 1.

In this context, the divalent bonding group (linking group) X comprising at least one heteroatom is understood to be a divalent chemical group which links the polymer backbone of the polymer (B) with the residue R of the general formula (II).

In various embodiments, the divalent linking group X in the general formula (II) is selected from -O-, -S-, -N(R")-, -R‴-O-, a substituted or unsubstituted amide, carbamate, urethane, urea, imino, carboxylate, carbamoyl, amidino, carbonate, sulfonate or sulfinate group, wherein R" is a hydrogen or a linear or branched and substituted or unsubstituted hydrocarbon residue having 1 to 12 carbon atoms; and R‴ is a linear or branched and substituted or unsubstituted hydrocarbon residue having 1 to 12 carbon atoms. The term "substituted" in relation to these groups means that a hydrogen atom present in these groups may be replaced by a non-hydrogen moiety, such as alkyl or aryl groups, preferably C₁₋₁₂ alkyl or C₆₋₁₄ aryl groups.

In preferred embodiments, the linking group X is urethane or urea group, more preferably urethane group. Urethane group can be formed, for example, either when the polymer backbone comprises terminal hydroxy groups and isocyanatosilanes are used as a further component, or conversely when a polymer having terminal isocyanate groups is reacted with an alkoxysilane comprising terminal hydroxy groups. Similarly, urea group can be obtained if a terminal primary or secondary amino group - either on the silane or on the polymer - is used, which reacts with a terminal isocyanate group that is present in the respective reactant. This means that either an aminosilane is reacted with a polymer having terminal isocyanate groups or a polymer that is terminally substituted with an amino group is reacted with an isocyanatosilane. Urethane and urea groups advantageously increase the strength of the polymer chains and of the overall crosslinked polymer.

In preferred embodiments, the linking group X is selected from the group consisting of -O-C(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, - NR"-, and -R‴-O-, wherein R" and R‴ are as defined above. In more preferred embodiments, the linking group X is selected from -O-C(=O)-N(R")-, -N(R")-C(=O)O- , -N(R")-C(=O)-N(R")-, -S-, -O-, -N(R")-, or -R‴-O-, wherein R" and R‴ are as defined above. In particularly preferred embodiments, the linking group X is selected from -O-C(=O)-N(R")-, -N(R")-C(=O)-N(R")-, -O-, or -R‴-O-, wherein R" and R‴ are as defined above, more preferably -O-C(=O)-NH- or -NH-C(=O)-NH-, most preferably -O-C(=O)-NH-.

The index "o" corresponds to 0 (zero) or 1, i.e., the linking group X links the polymer backbone with the residue R (o = 1) or the polymer backbone is bound or linked directly with the residue R (o = 0). In preferred embodiments, o is 1.

The residue R is a divalent hydrocarbon residue having 1 to 12 carbon atoms. The hydrocarbon residue can be a linear, branched or cyclic alkylene residue and can be substituted or unsubstituted. The hydrocarbon residue can be saturated or unsaturated. In preferred embodiments, R is a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R is a methylene, ethylene or n-propylene, in particular a methylene or n-propylene.

Alkoxysilane-functional compounds having a methylene group as binding link to the polymer backbone - so-called "alpha-silanes" - have a particularly high reactivity of the silyl group.

In general, a lengthening of the binding hydrocarbon chain leads to reduced reactivity of the polymers. In particular, "gamma-silanes" - which comprise the unbranched propylene residue as binding link - have a balanced ratio between necessary reactivity (acceptable curing times) and delayed curing (open assembly time, possibility of corrections after bonding).

R^{a} and R^{b} are substituents directly bound with the Si atom or the two of the substituents R^{a} and R^{b} can form a ring together with the Si atom to which they are bound. In preferred embodiments, R^{a} and R^{b} are the substituents directly bound with the Si atom.

Each R^{a} in the general formula (II) is, independently of one another, selected from a hydrocarbon radical containing 1 to 20 carbon atoms, preferably C₁ to C₈ alkyl groups, more preferably a methyl or an ethyl.

Each R^{b} in the general formula (II) is, independently of one another, selected from a hydroxyl group or a hydrolysable group, preferably alkoxy, acyloxy, oximo, or lactato group, more preferably C₁ to C₈ alkoxy groups C₁ to C₈ acyloxy groups, or C₁ to C₈ oximo groups.

In preferred embodiments, Each R^{b} is, independently of one another, selected from C₁ to C₈ alkoxy groups, in particular methoxy, ethoxy, i-propyloxy or i-butyloxy group. When k is 0 or 1, combinations of more than one group are also possible. However, acyloxy groups, such as an acetoxy group -O-CO-CH₃, oximo groups, or lactato groups can also be used as hydrolysable groups.

In preferred embodiments, k is 0 or 1.

In particularly preferable embodiments, the silyl group, i.e., -Si(R^{a})ₖ(R^{b})₃₋ₖ, is selected from alkyldialkoxysilyl or trialkoxysilyl, preferably selected from methyldimethoxysilyl, ethyldiethoxysilyl, trimethoxysilyl, or triethoxysilyl, most preferably methyldimethoxysilyl or trimethoxysilyl. Alkoxy groups are advantageous, since no substances which irritate mucous membranes are released during the curing of compositions comprising alkoxy groups. The alcohols formed by hydrolysis of the residues are harmless in the quantities released, and evaporate.

In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups. They are therefore suitable in particular for use as sealants. In addition, they split off even less alcohol during curing and are therefore of particular interest when the quantity of alcohol released is to be reduced.

With trialkoxysilyl groups, on the other hand, a higher degree of crosslinking can be achieved, which is particularly advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding adhesive under the influence of force and possibly temperature.

Methoxy and ethoxy groups as comparatively small hydrolysable groups with low steric bulk are very reactive and thus permit a rapid cure, even with low use of catalyst. They are therefore of particular interest for systems in which rapid curing is desirable, such as for example in adhesives with which high initial adhesion is required.

Interesting configuration possibilities are also opened up by combinations of the two groups. If, for example, methoxy is selected for one of the R^{b} and ethoxy for the other R^{b} within the same alkoxysilyl group, the desired reactivity of the silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolysable groups, which by nature exhibit lower reactivity. This is of particular interest if delayed curing is also to be achieved by means of the configuration of the alkoxy groups.

The silane-functional group of the general formula (II) can be a lateral group within the polymer chain of the polymer (B) or a terminal group of the polymer (B). In preferred embodiments, the silane-functional group of the general formula (II) is a terminal group of the polymer.

In preferred embodiments, the polymer (B) has at least two silane-functional groups of the general formula (II). In this case, the polymer (B) can have at least one lateral silane-functional group of the general formula (II) and at least one terminal silane-functional group of the general formula (II); or, at least two lateral silane-functional groups of the general formula (II); or, at least two terminal silane-functional groups of the general formula (II).

In particularly preferred embodiments, the polymer (B) has at least two terminal silane-functional groups of the general formula (II). Then, each polymer chain comprises at least two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolysable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that *inter alia* the elasticity, flexibility and heat resistance of the finished crosslinked compositions can be influenced in this way.

In preferred embodiments, the polymer backbone of the polymer (B) is selected from polyethers, poly(meth)acrylic acid ester, polyesters, polyurethanes, poly-α-olefins, more preferably polyethers or polyurethanes, or copolymers of at least two of said polymers such as polyether and poly(meth)acrylic acid ester copolymers.

A "polyether", "polyoxyalkylene", or "polyalkylene glycol", as used interchangeably herein, is understood to be a polymer in which the organic repeating units comprise ether functionalities C-O-C in the main chain. Examples for such polymers are polypropylene glycol and polyethylene glycol and copolymers thereof. Polymers having lateral ether groups, such as cellulose ethers, starch ethers and vinyl ether polymers, as well as polyacetals such as polyoxymethylene (POM) are not included in the polyethers.

A "poly(meth)acrylic acid ester" is understood to be a polymer based on (meth)acrylic acid esters, which therefore has as a repeating unit the structural motif -CH₂-CR'(COOR")-, where R' denotes a hydrogen atom (acrylic acid ester) or a methyl group (methacrylic acid ester) and R" denotes linear alkyl residues, branched alkyl residues, cyclic alkyl residues and/or alkyl residues comprising functional substituents, for example methyl, ethyl, isopropyl, cyclohexyl, 2-ethylhexyl or 2-hydroxyethyl residues.

A "polyurethane" is understood to be a polymer which has at least two urethane groups -NH-CO-O- in the main chain.

In particularly preferred embodiments, the silane-modified polymer (B) has a polyether backbone. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

The number average molecular weight Mₙ of the polyether on which the polymer is based is for preference 500 to 100,000 g/mol (daltons), more preferably 500 to 50,000, particularly preferably 1,000 to 30,000 and in particular 2,000 to 20,000 g/mol, most preferably 8,000 to 20,000 g/mol. Number average molecular weights of at least 500 g/mol are advantageous for the polyethers of the present invention since the corresponding compositions have a balanced ratio of viscosity (ease of processing), strength and elasticity.

Particularly advantageous viscoelastic properties can be achieved if polyethers having a narrow molecular weight distribution, and thus low polydispersity, are used. These can be produced, for example, by so-called double metal cyanide catalysis (DMC catalysis). Polyethers produced in this way are distinguished by a particularly narrow molecular weight distribution, by a high average molecular weight and by a very low number of double bonds at the ends of the polymer chains.

In a special embodiment of the present invention, the maximum polydispersity M_{w}/Mₙ of the polyether on which the polymer is based is therefore 2, particularly preferably 1.5 and most particularly preferably 1.3.

The ratio M_{w}/Mₙ (polydispersity) indicates the width of the molecular weight distribution and thus of the different degrees of polymerization of the individual chains in polydisperse polymers. For many polymers and polycondensates, a polydispersity value of about 2 applies. Strict monodispersity would exist at a value of 1. A low polydispersity of, for example, less than 1.5 indicates a comparatively narrow molecular weight distribution, and thus the specific expression of properties associated with molecular weight, such as e.g., viscosity. In particular, therefore, in the context of the present invention, the polyether on which the polymer (B) is based has a polydispersity (M_{w}/Mₙ) of less than 1.3.

In particularly preferred embodiments, the polymer (B) having at least one silane-functional group of the general formula (II) can be obtained by reacting at least one polyol and at least one isocyanatosilane. If necessary, the polyol(s) can be first reacted with at least one polyisocyanate for chain extension.

In certain embodiments, the polymer (B) having at least one silane-functional group of the general formula (II) can be obtained by reacting at least one polyol with a stoichiometric excess of at least one polyisocyanate; and reacting the obtained NCO-terminated polyurethane prepolymer with at least one aminosilane, such as 3-aminopropyltrimethoxysilane.

A "polyol" is understood to be a compound which contains at least two OH groups, irrespective or whether the compound contains other functional groups. However, a polyol used in accordance with the present invention preferably contains only OH groups as functional groups or, if other functional groups are present, none of these other functional groups is reactive at leastto isocyanates under the conditions prevailing during the reaction of the polyol(s) and isocyanatosilane(s) or polyisocyante(s).

The polyols suitable for preparing said silane-terminated polymer (B) are preferably polyether polyol. The above descriptions about the molecular weight and polydispersity of the polyether apply to the polyether polyol. The polyether polyol is preferably a polyalkylene oxide, particularly preferably polyethylene oxide and/or polypropylene oxide. In preferred embodiments, a polyether or a mixture of two polyethers are used.

The polyols to be used in accordance with the invention have an OH value of preferably about 1 to about 250.

Besides the polyethers, the polyol mixture may contain other polyols. For example, it may contain polyester polyols with a molecular weight of about 200 to about 30,000.

The isocyanatosilane used in the above reaction is understood to have the general formula of OCN-R-Si(R^{a})ₖ(R^{b})₃₋ₖ, wherein R, R^{a}, R^{b}, and k are as defined for the general formula (II).

A "polyisocyanate" is understood to be a compound which has at least two isocyanate groups -NCO. This compound does not have to be a polymer, and instead is frequently a low molecular compound.

The polyisocyanates suitable for preparing the polyurethane according to the invention include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or-1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H₁₂-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates. The polyisocyanate is preferably IPDI, TDI or MDI.

Other polyisocyanates suitable for use in accordance with the invention are isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

The total proportion of the polymer (B) having at least one silane-functional group of the general formula (II) in the composition according to the invention is preferably from about 0.1 to about 10.0 % by weight, more preferably from about 0.1 to about 5.0 % by weight, most preferably about 0.5 to about 2.0 % by weight, based in each case on the total weight of the curable composition. When the content of the polymer (B) is lower than 0.1 % by weight, no sufficient adhesion on various substrates, especially acrylic-based substrate such as PMMA, can be obtained. When the content of the polymer (B) is higher than 10.0 % by weight, a phase separation can happen while preparing the composition and it leads to negative impact on mechanical properties.

The curable compositions may comprise as an optional component (C) at least one curing catalyst, preferably selected from tin catalysts, titanium catalysts, aluminum catalysts, or zirconium catalysts, more preferably tin catalysts or titanium catalysts, or mixtures thereof.

In various embodiments, the curing catalyst may be a tin compound, preferably an organotin compound or an inorganic tin salt. Tin in these tin compounds is preferably bivalent or tetravalent. Component (C) can be added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate ortin(II) phenolate.

Suitable furthermore are tin compounds of ethyl silicate, dimethyl maleate, diethyl maleate, dioctyl maleate, dimethyl phthalate, diethyl phthalate, dioctyl phthalate, nonadecylic acid, myristic acid, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) oxide (e. g. di-n-octyltin oxide) or dialkyltin(IV) dicarboxylate, particularly di-n-butyltin dilaurate, di-n-butyltin diacetate, or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates, halogenated zirconium catalysts, or zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions can contain the curing catalyst (C) up to 2 % by weight, preferably in an amount of from about 0.001 to 2 % by weight, based in each case on the total weight of the composition. If a mixture of different catalysts is used, the amounts refer to the total amount in the composition.

The curable compositions can further contain at least one adhesion promoter (D).

The composition described herein can contain up to about 20% by weight of conventional adhesion promoters (tackifiers). Suitable as adhesion promoters are, for example, resins, terpene oligomers, coumarone/indene resins, aliphatic petrochemical resins, and modified phenol resins. Suitable within the context of the present invention are, for example, hydrocarbon resins, as can be obtained by polymerization of terpenes, primarily *α*- or *β*-pinene, dipentene, or limonene. These monomers are generally polymerized cationically with initiation using Friedel-Crafts catalysts. The terpene resins also include, for example, copolymers of terpenes and other monomers, for example, styrene, *α-*methylstyrene, isoprene, and the like. The aforesaid resins are used, for example, as adhesion promoters for contact adhesives and coating materials. Also suitable are terpene-phenol resins, which are prepared by the acid-catalyzed addition of phenols to terpenes or rosin. Terpene-phenol resins are soluble in most organic solvents and oils and miscible with other resins, waxes, and natural rubber. Also suitable as an additive in the aforesaid sense within the context of the present invention are the rosin resins and derivatives thereof, for example, the esters thereof.

Also suitable are silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In some embodiments, the adhesion promoter comprises at least one compound selected from:
(i) aminosilanes, optionally oligomerized together with alkyl-, alkenyl- or aryl-alkoxysilanes;
(ii) oligomers obtained from the condensation of aminosilanes, optionally oligomerized together with alkyl-, alkenyl- or aryl-alkoxysilanes; or
(iii) mixtures thereof.

More preferably, the adhesion promoter includes 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylaminomethyl-trimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamin, 4-amino-3,3-dimethylbutyltrimethoxy silane and 4-amino-3,3-dimetylbutyltriethoxy silane and mixtures thereof, particularly preferably of 3-aminopropyltri(m)ethoxysilane, aminomethyltri(m)ethoxysilane, 3-(N,N-dimethylamino)propyltri(m)ethoxysilane, (N,N-dimethylamino)methyltri(m)ethoxysilane, 3-(N,N-diethylamino)propyltri(m)ethoxysilane, (N,N-diethylamino)methyltri(m)ethoxysilane, 4-amino-3,3-dimetylbuthyltri(m)ethoxy silane, bis(3-tri(m)ethoxysilyl)propylamine, N-(n-butyl)-3-aminopropyltrimethoxysilane, oligomers obtained from the condensation of at least one of the above-mentioned aminosilanes, or mixtures thereof. The above-mentioned monomeric aminosilanes or oligomers can be oligomerized together with alkyl-, alkenyl- or aryl-alkoxysilanes, preferably methyltrimethoxysilane, ethyltrimethoxysilane, propyltrimethoxysilane, vinyltrimethoxysilane, n-butyltrimethoxysilane, isobutyltrimethoxysilane, phenyltrimethoxysilane, and/or octyltrimethoxysilane.

"(M)ethoxy", as used herein, relates to methoxy and ethoxy. Accordingly, "aminopropyltri(m)ethoxysilane" relates to both aminopropyltrimethoxysilane and aminopropyltriethoxysilane.

In some embodiments, the compositions of the invention may comprise at least one aminosilane as described above. In some embodiments, the compositions can comprise at least two aminosilanes.

In various embodiments, the adhesion promoter used may be a capped adhesion promoter of formula (III):

B-R¹¹-SiR¹²_{q}(OR¹³)_{3-q} (III)

wherein
R¹¹ is an alkylene group, optionally interrupted by a heteroatom, such as O, N, S or Si, preferably C₁-C₁₀ alkylene, more preferably C₁ or C₃ alkylene;
each R¹² is independently selected from the group consisting of hydrogen, halogen, amino, a substituted or unsubstituted alkyl, alkenyl, alkynyl, cycloaliphatic, aryl, heteroaryl, and heteroalicyclic group or a combination thereof;
each R¹³ is independently selected from the group consisting of a substituted or unsubstituted alkyl, alkenyl, alkynyl, or acyl group, preferably ethyl;
q independently stands for 0, 1, or 2; and
B is a nitrogen-containing group selected from the group of formula (6), (7), (8) or (9)

   -N=C(R¹⁴)₂ (6)

   -NR^{14a}-CR^{14b}=C(R^{14c})₂ (7)

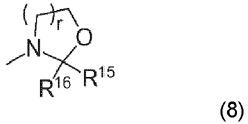

   -NR¹⁷R¹⁸ (9)

   wherein each R¹⁴, R^{14a}, R^{14b}, R^{14c}, R¹⁵ and R¹⁶ is independently selected from the group consisting of hydrogen, a substituted or unsubstituted alkyl, alkenyl, alkynyl, cycloaliphatic, aryl, heteroaryl, and heteroalicyclic group or a combination thereof;
r is 1, 2, 3 or 4;
R¹⁷ is -Si(R¹⁹)₃ and R¹⁸ is selected from -Si(R¹⁹)₃, hydrogen, a substituted or unsubstituted alkyl, alkenyl, alkynyl, cycloaliphatic, aryl, heteroaryl, and heteroalicyclic group or a combination thereof, or R¹⁷ and R¹⁸ combine to form together with the nitrogen atom to which they are attached a group of formula - Si(R¹⁹)₂-C₂₋₃ alkylene-Si(R¹⁹)₂-, wherein each R¹⁹ is independently selected from hydrogen, a substituted or unsubstituted alkyl, alkenyl, alkynyl, cycloaliphatic, or aryl group or a combination thereof.

The terms "blocked" and "capped" in relation to the compound of formula (III) are used interchangeably herein. Furthermore, the compound of formula (III) is herein referred to as a blocked/capped adhesion promoter. "Blocked", as used herein in connection with the compounds of formula (III), refers to the fact that said compounds are derivatized such that the active compound is only released upon contact with water and/or oxygen.

In various embodiments, in formula (6) one R¹⁴ is hydrogen or methyl, preferably hydrogen, and the other R¹⁴ is an unsubstituted alkyl group having 1 to 10 carbon atoms, preferably having 1 to 4 carbon atoms, such as, for example, isobutyl or methyl, or an unsubstituted aryl group, preferably phenyl.

In various embodiments, in formula (7) R^{14a} and R^{14b} and one R1^{4c} are hydrogen or methyl, preferably hydrogen, and the other R^{14c} is an unsubstituted alkyl group having 1 to 10 carbon atoms, preferably having 1 to 4 carbon atoms, or an unsubstituted aryl group, preferably phenyl.

In various embodiments, R¹⁵ and R¹⁶ in formula (8) are hydrogen. In other embodiments, one is hydrogen and the other is alkyl, preferably C₁-C₁₀ alkyl, such as 3-heptyl or 2-propyl, aryl or alkylaryl with up to 15 carbon atoms, such as 2-(1-(4-tert-butyl-phenyl)propyl. In another embodiment, R¹⁵ and R¹⁶ in formula (8) are both not hydrogen and may preferably be selected from the afore-mentioned groups.

In formula (8), r is preferably 1 or 2, more preferably 1.

In formula (9), R¹⁷ is -Si(R¹⁹)₃ and each R¹⁹ is preferably independently hydrogen, unsubstituted alkyl, more preferably C₁₋₄ alkyl, such as ethyl or methyl, or alkylene, such as vinyl. R¹⁸ is preferably hydrogen, alkyl, such as propylene or methylene, substituted with -Si(R¹⁹)₃, or -Si(R¹⁹)₃, preferably -Si(R¹⁹)₃, with each R¹⁹ independently being unsubstituted alkyl, preferably methyl or ethyl, more preferably methyl, or, alternatively, alkylene, such as vinyl. Generally, if one R¹⁹ is hydrogen, the other R¹⁹ groups are preferably not hydrogen. Preferred groups for R¹⁷ include, but are not limited to, -SiH(CH₃)₂, -Si(CH₃)₂(CH=CH)₂, -Si(CH₃)₂(C₆H₅), and -Si(CH₃)₃. In such embodiments, q may be 0 or 1, R¹¹ may be propylene, and R¹², if present, may be methyl and R¹³ may be methyl or ethyl, preferably ethyl.

In other preferred embodiments, R¹⁷ and R¹⁸ combine to form together with the nitrogen atom to which they are attached a group of formula -Si(R¹⁹)₂-C₂₋₃ alkylene-Si(R¹⁹)₂-, in particular -Si(R¹⁹)₂-(CH₂)₂-Si(R¹⁹)₂-, with R¹⁹ being unsubstituted alkyl, preferably methyl or ethyl, more preferably methyl, or, alternatively, vinyl.

In various embodiments, the capped adhesion promoter is a ketimine of formula (III) with q being 0, R¹¹ being methylene or propylene, preferably propylene, each R¹³ being ethyl and B being a group of formula (6), wherein
(i) one R¹⁴ is methyl and the second R¹⁴ is isobutyl or methyl; or
(ii) one R¹⁴ is hydrogen and the second R¹⁴ is phenyl.

In various other embodiments, the capped adhesion promoter is a silazane of formula (III) with q being 0, R¹¹ being methylene or propylene, preferably propylene, each R¹³ being ethyl or methyl, preferably ethyl, and B being a group of formula (9), wherein R¹⁷ is -Si(R¹⁹)₃ and R¹⁸ is hydrogen, alkyl substituted with -Si(R¹⁹)₃, or -Si(R¹⁹)₃, preferably -Si(R¹⁹)₃, and each R¹⁹ is independently alkyl, preferably methyl or ethyl, more preferably methyl. In various alternative embodiments, at least one R¹⁹ can be alkylene, preferably vinyl.

In preferred embodiments, the curable compositions contain the adhesion promoter in an amount of up to about 5 % by weight, more preferably from about 0.01 to about 5 % by weight, in particularly preferably about 0.1 to about 2 % by weight, based in each case on the total weight of the composition. If a mixture of (capped) adhesion promoters is used, the amounts refer to the total amount of such (capped) adhesion promoters in the composition.

The curable compositions can further comprise at least one additive (E) having a ketone functional moiety of formula (IV)

R²⁰-C(=O)-R²¹

wherein
R²⁰ is selected from a substituted or unsubstituted alkyl, alkenyl, alkenyloxy, alkynyl, alkylnyloxy, cycloaliphatic, cycloaliphatic-O-, aryl, aryloxy, heteroaryl, heteroaryloxy, heteroalicyclic, heteroalicyclicoxy, acyl, acyloxy group or a combination thereof; and
R²¹ is selected from hydrogen, halogen, amino, oximino, a substituted or unsubstituted alkyl, alkenyl, alkenyloxy, alkynyl, alkylnyloxy, cycloaliphatic, cycloaliphatic-O-, aryl, aryloxy, heteroaryl, heteroaryloxy, heteroalicyclic, heteroalicyclicoxy, acyl, acyloxy group or a combination thereof; or wherein R²⁰ and R²¹ combine to form together with the carbon atom to which they are attached a 5 to 18-membered substituted or unsubstituted alicyclic or heteroalicyclic group;
wherein R²⁰ and R²¹ combined comprise up to 24, preferably up to 18, carbon atoms.

In various embodiments, the additive (E) has a molecular weight of up to 500 g/mol, preferably up to 300 g/mol. It is preferred that the additive (E) is a monomeric component.

In various embodiments, additive (E) is selected from ketones and aldehydes of formula (IV), wherein
(i) R²⁰ is selected from a substituted or unsubstituted alkyl, aryl, heteroaryl, or a combination thereof, preferably C₁₋₁₀ alkyl, C₆₋₁₄ aryl and C₅₋₁₃ heteroaryl, more preferably substituted or unsubstituted phenyl, most preferably phenyl or methoxy-phenyl; and R²¹ is hydrogen; or
(ii) R²⁰ and R²¹ are each independently selected from a substituted or unsubstituted alkyl, aryl, heteroaryl, or a combination thereof, preferably C₁₋₁₀ alkyl, C₆₋₁₄ aryl and C₅₋₁₃ heteroaryl.

In various embodiments, the additive (E) is selected from ketones, including, without limitation 4-(4-hydroxyphenyl)-butane-2-one, cyclohexanone, benzophenone, acetophenone, 1,1,1-trichloracetone, 2-butanone, 2-pentanone, 3-pentanone, 3-methyl-2-butanone, iso-propylmethylketone, 2-hexanone, 4-methyl-2-pentanone, iso-butylmethylketone, 3,3-dimethyl-2-butanone, tert-butylmethylketone, 4-heptanone, cyclopentanone, 2,6-dimethyl-4-heptanone, di-iso-butylketone, 5-nonanone, di-n-butylketone, 2,4-dimethyl-3-pentanone, di-iso-propylketone, 2,4-pentandione, acetylacetone, civetone, carvone and camphor.

In various embodiments, the additive (E) is selected from aldehydes, including, without limitation, p-tolualdehyde, vanillin (4-hydroxy-3-methoxybenzaldehyde), valeraldehyde, salicylaldehyde, cinnamaldehyde, butyraldehyde, isovaleraldehyde, n-pentanal, n-hexanal, n-heptanal, 2-ethylhexanal, n-octanal, n-nonanal, n-decanal, n-undecanal, dodecanal, trans-hexene-2-al, benzaldehyde, 2-methoxy benzaldehyde, 3-methoxy benzaldehyde, and 4-methoxy benzaldehyde.

In various embodiments, the additive (E) may be an aldehyde also used as a fragrance or part of a fragrance composition. Such aldehydes have the additional advantage that they can improve the odor of a composition and mask or prevent malodors caused by other components. Suitable aldehydes include, without limitation, adoxal (2,6,10-trimethyl-9-undecenal), anis aldehyde (4-methoxybenzaldehyde), cymal (3-(4-isopropyl-phenyl)-2-methylpropanal), ethylvanillin, florhydral (3-(3-isopropylphenyl)butanal), helional (3-(3,4-methylenedioxyphenyl)-2-methylpropanal), heliotropin, hydroxycitronellal, lauraldehyde, lyral (3- and 4-(4-hydroxy-4-methylpentyl)-3-cyclohexene-1-carboxaldehyde), methylnonylacetaldehyde, lilial (3-(4-tert-butylphenyl)-2-methylpropanal), phenylacetaldehyde, undecylenal,dehyde, vanillin, 2,6,10-trimethyl-9-undecenal, 3-dodecene-1-al, alpha-n-amylcinnamaldehyde, melonal (2,6-dimethyl-5-heptenal), 2,4-di-methyl-3-cyclohexene-1-carboxaldehyde (triplal), 4-methoxybenzaldehyde, benzaldehyde, 3-(4-tert- butylphenyl)-propanal, 2-methyl-3-(para-methoxyphenyl)propanal, 2-methyl-4-(2,6,6-trimethyl-2(1)-cyclohexene-1-yl)butanal, 3-phenyl-2-propenal, cis-/trans-3,7-dimethyl-2,6-octadiene-1-al, 3,7-dimethyl-6-octene-1-al, [(3,7-dimethyl-6-octenyl)oxy]acetaldehyde, 4-isopropylbenzylaldehyde, 1,2,3,4,5,6,7,8-octahydro-8,8-dimethyl-2-naphthaldehyde, 2,4-dimethyl-3-cyclohexene-1-carboxaldehyde, 2-methyl-3-(isopropylphenyl)propanal, 1-decanal, 2,6-dimethyl-5-heptenal, 4-(tricyclo[5.2.1.0(2,6)]-decylidene-8)-butanal, octahydro-4,7-methane-1H-indenecarboxaldehyde, 3-ethoxy-4-hydroxybenzaldehyde, paraethyl-alpha,alpha-dimethylhydrocinnamaldehyde, alpha-methyl-3,4-(methylenedioxy)-hydrocinnamaldehyde, 3,4-methylenedioxybenzaldehyde, alpha-n-hexylcinnamaldehyd, m-cymene-7-carboxaldehyde, alpha-methylphenylacetaldehyde, 7-hydroxy-3,7-dimethyloctanal, undecenal, 2,4,6-trimethyl-3-cyclohexene-1-carboxaldehyde, 4-(3)(4-methyl-3-pentenyl)-3-cyclohexenecarboxaldehyde, 1-dodecanal, 2,4-dimethylcyclohexene-3-carboxaldehyde, 4-(4-hydroxy-4-methylpentyl)-3-cylohexene-1-carboxaldehyde, 7-methoxy-3,7-dimethyloctane-1-al, 2-methyl-undecanal, 2-methyldecanal, 1-nonanal, 1-octanal, 2,6,10-trimethyl-5,9-undecadienal, 2-methyl-3-(4-tert-butyl)propanal, dihydrocinnamaldehyd, 1-methyl-4-(4-methyl-3-pentenyl)-3-cyclohexene-1-carboxaldehyde, 5- or 6-methoxyhexahydro-4,7-methanindane-1- or -2-carboxaldehyde, 3,7-dimethyloctane-1-al, 1-undecanal, 10-undecen-1-al, 4-hydroxy-3-methoxybenzaldehyde, 1-methyl-3-(4-methylpentyl)-3-cyclohexenecarboxaldehyde, 7-hydroxy-3,7-dimethyl-octanal, trans-4-decenal, 2,6-nonadienal, paratolylacetaldehyde, 4-methylphenylacetaldehyde, 2-methyl-4-(2,6,6-trimethyl-1-cyclohexene-1-yl)-2-butenal, ortho-methoxycinnamaldehyd, 3,5,6-trimethyl-3-cyclohexene- carboxaldehyde, 3,7-dimethyl-2-methylen-6-octenal, phenoxyacetaldehyde, 5,9-dimethyl-4,8-decadienal, 6,10-dimethyl-3-oxa-5,9-undecadiene-1-al, hexahydro-4,7-methanindane-1-carboxaldehyde, 2-methyloctanal, alpha-methyl-4-(1-methylethyl)benzeneacetaldehyde, 6,6-dimethyl-2-norpinene-2-propionaldehyde, paramethylphenoxyacetaldehyde, 2-methyl-3-phenyl-2-propene-1-al, 3,5,5-trimethylhexanal, hexahydro-8,8-dimethyl-2-naphthaldehyde, 3-propyl-bicyclo-[2.2.1]-hept-5-ene-2-carbaldehyde, 9-decenal, 3-methyl-5-phenyl-1-pentanal, methylnonylacetaldehyde, hexanal and trans-2-hexenal.

In various embodiments, the additive (E) may be a ketone also used as a fragrance or part of a fragrance composition. Such ketones have the additional advantage that they can improve the odor of a composition and mask or prevent malodors caused by other components. Suitable ketones include, without limitation, methyl-beta-naphthylketone, musk indanone (1,2,3,5,6,7-hexahydro-1,1,2,3,3-pentamethyl-4H-indene-4-one), tonalid (6-acetyl-1,1,2,4,4,7-hexamethyltetraline), alpha-damascone, beta-damascone, delta-damascone, iso-damascone, damascenone, methyl dihydrojasmonate, menthone, carvone, camphor, 3,4,5,6,6-pentamethylhept-3-en-2-on, fenchon, alpha-ionon, beta-ionon, gamma-methyl-ionon, fleuramone (2-heptylcyclopen-tanone), dihydrojasmone, cis-jasmone, iso-E-Super (1-(1,2,3,4,5,6,7,8-octahydro-2,3,8,8-tetramethyl-2-naphthalenyl)-ethane-1-on (and isomers)), methylcedrenylketone, acetophenone, methylacetophenone, para-methoxyacetophenone, methyl-beta-naphtylketone, benzylacetone, benzophenone, para-hydroxyphenylbutanone, 3-methyl-5-propyl-2-cyclohexenone, 6-isopropyldecahydro-2-naphtone, dimethyloctenone, frescomenthe (2-butan-2-yl-cyclohexan-1-one), 4-(1-ethoxyvinyl)-3,3,5,5-tetramethylcyclohexanone, methylheptenone, 2-(2-(4-methyl-3-cyclohexen-1-yl)propyl)cyclopentanone, 1-(p-menthen-6(2)yl)-1-propanone, 4-(4-hydroxy-3-methoxyphenyl)-2-butanone, 2-acetyl-3,3-dimethylnorbornane, 6,7-Dihydro-1,1,2,3,3-pentamethyl-4(5H)-indanone, 4-damascol (5-methyl-5-phenylhexan-3-one), dulcinyl (4-(1,3-benzodioxol-5-yl)butan-2-one), hexalon (1-(2,6,6-trimethyl-2-cyclohexene-1-yl)-1,6-heptadien-3-one), isocyclemon E (1-(1,2,3,4,5,6,7,8-Octahydro-2,3,8,8-tetramethyl-2-naphthalenyl)ethanone), methylnonylketone, methylcyclocitrone, methyllavenderketone, orivon (4-tert-amyl-cyclohexanone), 4-tert-butylcyclohexanone, delphon (2-pentyl-cyclopentanone), muscone (CAS 541-91-3), neobutenone (1-(5,5-dimethyl-1- cyclohexenyl)pent-4-en-1-one), plicaton (CAS 41724-19-0), velouton (2,2,5-trimethyl-5- pentylcyclopentan-1-one), 2,4,4,7-tetramethyl-oct-6-en-3-one and tetrameran (6,10-dimethylundecen-2-one) .

The curable composition can comprise at least one additional auxiliary substance, preferably selected, for example, from the group consisting of plasticizers, extenders, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

Preferably, the curable compositions therefore contain at least one auxiliary substance.

It is conceivable that the viscosity of the curable composition is too high for certain applications. It can then be reduced in a simple and expedient way usually by using a reactive diluent, without any signs of demixing (e.g., plasticizer migration) occurring in the cured mass.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C₄₋₁₆ alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C₁₋₄-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

In various embodiments, the plasticizer may be a polydimethylsiloxane different from (A), particularly a PDMS that does not have terminal groups of formula (I).

The curable compositions may contain the plasticizer preferably in an amount of 0 to 40% by weight, preferably in an amount of 0 to 30% by weight based in each case on the total weight of the composition.

If a mixture of plasticizers is used, the amounts refer to the total amount of plasticizers in the composition.

The curable composition can further contain at least one stabilizer, selected from antioxidants, UV stabilizers, and drying agents.

All conventional antioxidants may be used as antioxidants. They are preferably present up to about 7% by weight, particularly up to about 5% by weight.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation

Isocyanates, for example, are suitable as drying agents.

Advantageously, however, silanes are used as drying agents. For example, vinylsilanes such as 3-vinylpropyltriethoxysilane, oximo silanes such as methyl-O,O',O"-butan-2-one-trioximosilane or O,O',O",O‴-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecularweight (Mₙ) of less than about 5000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions generally contain about 0 to about 6% by weight of drying agent.

The composition described herein can additionally contain fillers. Suitable here are, for example, chalk, lime powder, precipitated and/or pyrogenic (fumed) silica, zeolites, bentonites, magnesium carbonate, diatomaceous earth, alumina, clay, tallow, titanium oxide, iron oxide, zinc oxide, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

The pyrogenic (fumed) and/or precipitated silica preferably have a BET surface area of 10 to 250 m²/g. When they are used, they do not cause any additional increase in the viscosity of the composition of the invention, but contribute to strengthening the cured composition.

It is likewise conceivable to use pyrogenic and/or precipitated silica with a BET surface area, advantageously with 100 to 250 m²/g, particularly 110 to 170 m²/g, as a filler. Because of the higher BET surface area, the same effect, e.g., strengthening of the cured preparation, can be achieved at a smallerweight proportion of silicic acid. Further substances can thus be used to improve the composition described herein in terms of other requirements.

Suitable further as fillers are hollow spheres having a mineral shell or a plastic shell. These can be, for example, hollow glass spheres which are obtainable commercially under the trade names Glass Bubbles^{®}. Plastic-based hollow spheres, e.g., Expancel^{®} or Dualite^{®}, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e.g., hydrogenated castor oil, fatty acid amides, or swellable plastics such as PVC. In order to be readily squeezable out of a suitable dispensing device (e.g., a tube), such preparations possess a viscosity from 3000 to 15,000, preferably 40,000 to 80,000 mPas, or even 50,000 to 60,000 mPas.

The fillers are preferably used in an amount of 1 to 80% by weight, particularly preferably 2 to 60% by weight. Of course, mixtures of a number of fillers can also be used. In this case, the quantitative data naturally refer to the total amount of filler in the composition.

In preferred embodiments, the curable composition according to the invention comprises the following components in the stated proportions by weight:

| | |
|---|---|
| at least one polyorganosiloxane (A) | about 15 to 90 wt.%, preferably 20 to 70 wt.%; |
| at least one polymer (B) | about 0.1 to 10 wt.%, preferably 0.1 to 5 wt.%; |
| optionally, at least one curing catalyst (C) | about 0 to 2 wt.%, preferably 0.001 to 2 wt.%; |

and, optionally, at least one or more auxiliary substance(s), wherein the proportions by weight add up to 100 wt.% and the proportions by weight are based on the total weight of the curable composition.

In other preferred embodiments, the curable composition according to the invention comprises the following components in the stated proportions by weight:

| | |
|---|---|
| at least one polyorganosiloxane (A) | about 15 to 90 wt.%, preferably 20 to 70 wt.%; |
| at least one polymer (B) | about 0.1 to 10 wt.%, preferably 0.1 to 5 wt.%; |
| optionally, at least one curing catalyst (C) | about 0 to 2 wt.%, preferably 0.001 to 2 wt.%; |
| optionally, at least one adhesion promoter (D) | about 0 to 5 wt.%, preferably 0.01 to 5 wt.%; |

and, optionally, at least one or more auxiliary substance(s), wherein the proportions by weight add up to 100 wt.% and the proportions by weight are based on the total weight of the curable composition.

With regard to the preferred representatives of the individual components and the preferably used quantities thereof, the statements made above in the description of the respective components apply.

The preparation of the curable composition according to the invention can take place by simple mixing of the polyorganosiloxane (A), the silane-functional polymer (B), optionally the curing catalyst (C), and optionally the other ingredients described herein. This can take place in suitable dispersing units, e.g., a high-speed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also relates to an adhesive, sealant, or coating material comprising the curable composition according to the invention.

The invention further relates to the use of the curable composition according to the invention as an adhesive, sealant, or coating material. A further field of application for the compositions is the use as a plugging compound, hole filler, or crack filler. The use as an adhesive and/or sealant is preferred. The compositions are suitable, inter alia, for bonding plastics such as PVC (polyvinyl chloride), ABS (acrylonitrile-butadiene-styrene copolymer), polycarbonate, acrylic materials, in particular PMMA (poly(methyl methacrylate)), metals, glass, ceramic, tile, wood, wood-based materials, paper, paper-based materials, rubber, and textiles, for gluing floors, and for sealing building elements, windows, wall and floor coverings, and joints in general. In this case, the materials can be bonded to themselves or as desired to one another.

The following examples serve to explain the invention, but the invention is not limited thereto.

### Examples

The formulations were prepared as described in the Tables below and subjected to curing performance tests as follows:
Determination of Skin-over time (SOT): Skin-over time (SOT) is defined as the time required for the material to form a non-tacky surface film. The determination of the skin overtime is carried out according to DIN 50014 under standard climate conditions (23+/- 2°C, relative humidity 50 +/- 5%). The temperature of the sealant must be 23 +/- 2°C, with the sealant stored for at least 24 h beforehand in the laboratory. The sealant is applied to a sheet of paper and spread out with a putty knife to form a skin (thickness about 2 mm, width about 7 cm). The stopwatch is started immediately. At intervals, the surface is touched lightly with the fingertip and the finger is pulled away, with sufficient pressure on the surface that an impression remains on the surface when the skin formation time is reached. The skin-over time is reached when sealing compound no longer adheres to the fingertip. The skin-over time (SOT) is expressed in minutes.

Measurement of Shore A hardness: Shore A hardness was measured according to ISO 868.

Determination of the depth of cure (DOC): A strip of the material with a height of 10 mm (+/- 1 mm) and width of 20 mm (+/- 2 mm) was applied over a plastic foil (PP) using a Teflon spatula. After storing the sample for 24 hours at normal conditions (23 +/- 2 °C, relative humidity 50 +/- 5 %), a section of the strip was cut off and the thickness of the cured layer was measured with a caliper. The depth of cure after 24 hours is expressed in millimeters.

Peel test: If possible and needed, substrate (test panel) is cleaned prior to application using a suitable solvent. A strip of the material with a height of 10 mm (+/- 1 mm) and width of 20 mm (+/- 2 mm) was applied over the substrate using a Teflon spatula / cartridge and cartridge gun. The sample was stored for 7 days at normal conditions (23 +/- 2 °C, relative humidity 50 +/- 5 %). The cured material was cut back for at least 15mm with a shape blade and the bead pulled by hand. Failure mode was recorded as following:
✔: Cohesion failure (CF)
~: Adhesion failure (AF) with "strong resistance"
×: Adhesion failure (AF).

### Example 1

The compositions 1-A to 1-H were prepared by using the raw materials listed in Tables 1 and 3. α,ω-dihydroxy-terminated polydimethylsiloxane and vinyltrimethoxysilane were first reacted to create an alkoxysilane-terminated polydimethylsiloxane in presence of plasticizer. In subsequent steps filler and other components were added. Mixing occurred in a dual asymmetric centrifugal mixer (SpeedMixer TM DAC 400.2 VAC-P) at 0-2500 RPM for 100s and under vacuum (80-200 mbar).

**Table 1**

| Components (wt%) | 1-A | 1-B | 1-C | 1-D |
|---|---|---|---|---|
| α,ω-dihydroxy-terminated polydimethylsiloxane with a viscosity of 80,000 cSt | 37 | 36.6 | 36.6 | 36.6 |
| Plasticizer (Polydimethylsiloxane with a viscosity of 1,000 cSt) | 12.4 | 12.2 | 12.2 | 12.2 |
| Vinyltrimethoxysilane | 1.8 | 1.8 | 1.8 | 1.8 |
| Lithium hydroxide in MeOH | 0.2 | 0.2 | 0.2 | 0.2 |
| Highly dispersed silica | 3.8 | 3.6 | 3.6 | 3.6 |
| Surface coated calcium carbonate | 44 | 44 | 44 | 44 |
| Mixture of dibutyl-tin(IV) species in N-[3-(Dimethoxymethylsilyl)propyl]ethylenediamine | 0.8 | 0.8 | 0.8 | 0.8 |
| Silane-modified polymer (Desmoseal^{®} S XP 2749, Covestro) | | 1.0 | | |
| PPG 2000 (Voranol 2000) | | | 1.0 | |
| PPG 18200 (Acclaim^{®} 18200) | | | | 1.0 |

**Table 2 - Tests of the compositions directly after mixing**

| | 1-A | 1-B | 1-C | 1-D |
|---|---|---|---|---|
| SOT (min) | 30 | 28 | 34 | 40 |
| Shore A (1d) | nm | 6 | 6 | 5 |
| Shore A (7d) | 30 | 26 | 22 | 27 |
| Depth of cure (mm) | nm | 2.5 | 2.2 | 2.2 |

| Peel test | | | | |
|---|---|---|---|---|
| PMMA transparent | × | ✔ | × | × |
| Perspex Asterite ^{®} 1A17 | × | ✔ | × | × |
| Perspex Asterite ^{®} 1A28 | × | ✔ | × | × |
| brass | ✔ | ✔ | ✔ | ✔ |
| aluminium blanc | ✔ | ✔ | ✔ | ✔ |
| copper | ✔ | ✔ | ✔ | ✔ |
| galvanized steel | ✔ | ✔ | ✔ | ✔ |
| glass | nm | ✔ | ✔ | ✔ |
| wood | nm | ✔ | ✔ | ✔ |

**Table 3**

| Components (wt%) | 1-E | 1-F | 1-G | 1-H |
|---|---|---|---|---|
| α,ω-dihydroxy-terminated polydimethylsiloxane with a viscosity of 80,000 cSt | 36.8 | 36.5 | 35.6 | 33.7 |
| Plasticizer (Polydimethylsiloxane with a viscosity of 1,000 cSt) | 12.3 | 12.1 | 12.0 | 11.2 |
| Vinyltrimethoxysilane | 1.8 | 1.8 | 1.7 | 1.6 |
| Lithium hydroxide in MeOH | 0.2 | 0.2 | 0.2 | 0.2 |
| Highly dispersed silica | 3.7 | 3.6 | 3.6 | 3.5 |
| Surface coated calcium carbonate | 44 | 43 | 41 | 39 |
| Mixture of dibutyl-tin(IV) species in N-[3-(Dimethoxymethylsilyl)propyl]ethylenediamine | 0.8 | 0.8 | 0.8 | 0.7 |
| Silane-modified polymer (Desmoseal^{®} S XP 2749, Covestro) | 0.5 | 2.0 | 5.0 | 10.0 |

**Table 4 - Peel tests directly after mixing**

| | 1-E | 1-F | 1-G | 1-H |
|---|---|---|---|---|
| PMMA transparent | ∼ | ✔ | ✔ | ✔ |
| Perspex Asterite ^{®} 1A17 | ✔ | ✔ | ✔ | ✔ |
| Perspex Asterite ^{®} 1A28 | ✔ | ✔ | ✔ | ✔ |
| brass | ✔ | ✔ | ✔ | ✔ |
| aluminium blanc | ✔ | ✔ | ✔ | ✔ |
| copper | ✔ | ✔ | ✔ | ✔ |
| galvanized steel | ✔ | ✔ | ✔ | ✔ |
| glass | ✔ | ✔ | ✔ | ✔ |
| wood | ✔ | ✔ | ✔ | ✔ |

### Example 2

The compositions 2-A to 2-I were prepared by using the raw materials listed in Tables 5 and 7. α,ω-dihydroxy-terminated polydimethylsiloxane and methyltris(methylethylketoximo)silane, vinyltris(methylethylketoximo)silane, and vinylmethoxy-di(acetonoximo)silane were first reacted to create an oximosilane-terminated polydimethylsiloxane in presence of plasticizer and dearomatized aliphatic fluid. In subsequent steps filler and other components were added. Mixing occurred in a dual asymmetric centrifugal mixer (SpeedMixer TM DAC 400.2 VAC-P) at 0-2500 RPM for 100s and under vacuum (80-200 mbar).

**Table 5**

| Components (wt%) | 2-A | 2-B | 2-C | 2-D | 2-E |
|---|---|---|---|---|---|
| α,ω-dihydroxy-terminated polydimethylsiloxane with a viscosity of 80,000 cSt | 60 | 59 | 59 | 59 | 59 |
| Plasticizer (Polydimethylsiloxane with a viscosity of 1,000 cSt) | 16.3 | 16.1 | 16.1 | 16.1 | 16.1 |
| Dearomatized aliphatic fluids - extender | 8.6 | 8.5 | 8.5 | 8.5 | 8.5 |
| Methyltris(methylethylketoximo)silane | 2.0 | 2.0 | 2.0 | 2.0 | 2.0 |
| Vinyltris(methylethylketoximo)silane | 0.5 | 0.5 | 0.5 | 0.5 | 0.5 |
| Vinylmethoxy-di(acetonoximo)silane | 1.7 | 1.7 | 1.7 | 1.7 | 1.7 |
| Highly dispersed silica | 10 | 10 | 10 | 10 | 10 |
| N-(2-Aminoethyl)-3-aminopropyltrimethoxysilane | 0.4 | 0.4 | 0.4 | 0.4 | 0.4 |
| Oligomeric 3-aminopropyltriethoxysilane | 0.4 | 0.4 | 0.4 | 0.4 | 0.4 |
| Dioctyl tin oxide (DOTO) | 0.06 | 0.06 | 0.06 | 0.06 | 0.06 |
| Silane-modified polymer (Desmoseal^{®} S XP 2749, Covestro) | | 1.0 | | | |
| Silane-modified polymer (Geniosil^{®} STP-E10, Wacker) | | | 1.0 | | |
| PPG 2000 (Voranol 2000) | | | | 1.0 | |
| PPG 18200 (Acclaim^{®} 18200) | | | | | 1.0 |

**Table 6 - Tests directly after mixing**

| | 2-A | 2-B | 2-C | 2-D | 2-E |
|---|---|---|---|---|---|
| SOT (min) | 7 | 7 | 6 | 7 | 7 |
| Shore A 1d | nm | 16 | 18 | 17 | 17 |
| Shore A 7d | 20 | 20 | 20 | 20 | 20 |
| Depth of cure | nm | 3.6 | 3.8 | 3.6 | 3.5 |

| Peel test | | | | | |
|---|---|---|---|---|---|
| PMMA (transparent) | × | ✔ | ✔ | × | × |
| Perspex Asterite ^{®} 1A17 | × | ✔ | ✔ | × | × |
| Perspex Asterite ^{®} 1A28 | × | ✔ | ✔ | × | × |
| brass | × | ✔ | ✔ | ✔ | ✔ |
| aluminium blanc | ✔ | ✔ | ✔ | ✔ | ✔ |
| copper | ✔ | ✔ | ✔ | ✔ | ✔ |
| galvanized steel | ✔ | ✔ | ✔ | ✔ | ✔ |
| glass | nm | ✔ | ✔ | ✔ | ✔ |
| wood | nm | ✔ | ✔ | ✔ | ✔ |

**Table 7**

| Components (wt%) | 2-F | 2-G | 2-H | 2-1 |
|---|---|---|---|---|
| α,ω-dihydroxy-terminated polydimethylsiloxane with a viscosity of 80,000 cSt | 60 | 59 | 57 | 55 |
| Plasticizer (Polydimethylsiloxane with a viscosity of 1,000 cSt) | 16.2 | 16.0 | 15.5 | 14.8 |
| Dearomatized aliphatic fluids - extender | 8.6 | 8.4 | 8.2 | 7.8 |
| Methyltris(methylethylketoximo)silane | 2.0 | 2.0 | 1.9 | 1.8 |
| Vinyltris(methylethylketoximo)silane | 0.5 | 0.5 | 0.5 | 0.5 |
| Vinylmethoxy-di(acetonoximo)silane | 1.7 | 1.7 | 1.6 | 1.4 |
| Highly dispersed silica | 10 | 10 | 9.5 | 8.3 |
| N-(2-Aminoethyl)-3-aminopropyltrimethoxysilane | 0.4 | 0.4 | 0.4 | 0.4 |
| Oligomeric 3-aminopropyltriethoxysilane | 0.4 | 0.4 | 0.4 | 0.4 |
| Dioctyl tin oxide (DOTO) | 0.06 | 0.06 | 0.05 | 0.05 |
| Silane-modified polymer (Desmoseal^{®} S XP 2749, Covestro) | 0.5 | 2.0 | 5.0 | 10.0 |

**Table 8 - Peel tests directly after mixing**

| | 2-F | 2-G | 2-H | 2-I |
|---|---|---|---|---|
| PMMA (transparent) | ✔ | ✔ | ✔ | ✔ |
| Perspex Asterite ^{®} 1A17 | ✔ | ✔ | ✔ | ✔ |
| Perspex Asterite ^{®} 1A28 | ✔ | ✔ | ✔ | ✔ |
| brass | ✔ | ✔ | ✔ | ✔ |
| aluminium blanc | ✔ | ✔ | ✔ | ✔ |
| copper | ✔ | ✔ | ✔ | ✔ |
| galvanized steel | ✔ | ✔ | ✔ | ✔ |
| glass | ✔ | ✔ | ✔ | ✔ |
| wood | ✔ | ✔ | ✔ | ✔ |

## Claims

1. A curable composition comprising
(A) at least one polyorganosiloxane containing at least one terminal group of the general formula (I):
-Si(R¹)ₘ(Y)₃₋ₘ (I),
wherein each R¹ is independently selected from a hydrocarbon radical containing 1 to 20 C atoms or a triorganosiloxy group of formula -O-Si(R²)₃, where each R² is independently selected from a hydrocarbon radical containing 1 to 20 C atoms;
each Y is independently selected from a hydroxy group or a hydrolysable group selected from the group consisting of a hydrogen atom, a halogen atom, an alkoxy group, an acyloxy group, an oximo group, an acetoxy group, an amino group, an amide group, an acid amide group, an aminoxy group, a mercapto group, and an alkenyloxy group; and,
m is 0, 1, or 2;
(B) at least one polymer having at least one silane-functional group of the general formula (II)
-Xₒ-R-Si(R^{a})ₖ(R^{b})₃₋ₖ (II),
wherein
X is a divalent linking group containing at least one heteroatom;
R is selected from divalent hydrocarbon residues having 1 to 12 carbon atoms;
each R^{a} is, independently of one another, selected from a hydrocarbon radical containing 1 to 20 carbon atoms and each R^{b} is, independently of one another, selected from a hydroxyl group or a hydrolysable group, wherein R^{a} and R^{b} are substituents directly bound with the Si atom or the two of the substituents R^{a} and R^{b} form a ring together with the Si atom to which they are bound;
k is 0, 1, or 2; and
o is 0 or 1; and
(C) optionally, at least one curing catalyst.

2. The curable composition according to claim 1, wherein the polyorganosiloxane is a polydiorganosiloxane, preferably a polydimethylsiloxane (PDMS).

3. The curable composition according to claim 1 or 2, wherein
R¹ is selected from an alkyl, alkenyl, alkynyl, cycloalkyl, aryl, or aralkyl group containing 1 to 20 C atoms, preferably selected from an alkyl group containing 1 to 10 C atoms, an alkenyl group containing 2 to 10 C atoms, aryl group containing 6 to 20 C atoms, or an aralkyl group containing 7 to 20 C atoms; and/or
Y is selected from an alkoxy group, an oximo group, or an acetoxy group, preferably an alkoxy or oximo group.

4. The curable composition according to any one of claims 1 to 3, wherein the polyorganosiloxane (A) is obtainable by reacting a polyorganosiloxane having at least one terminal reactive group A' (la) which may be reacted with a silane crosslinker having the formula (lb)
C-Si(R¹)ₘ(Y)₃₋ₘ (lb),
wherein
C is a reactive group that reacts with the terminal reactive group A'; and,
R¹, Y, and m are the same as defined for the general formula (I).

5. The curable composition according to claim 4, wherein
the terminal reactive group A' is selected from a hydroxy, amino, or isocyanate group, preferably is a hydroxy group; and
the reactive group C is identical to Y, preferably selected from an alkoxy, oximo, or acetoxy group, more preferably an alkoxy or oximo group.

6. The curable composition according to any one of claims 1 to 5, wherein the polymer (B) has at least two silane-functional groups of the general formula (II), preferably at least two terminal silane-functional groups of the general formula (II).

7. The curable composition according to any one of claims 1 to 6, wherein the polymer backbone of the polymer (B) is selected from polyethers, poly(meth)acrylic acid ester, polyesters, polyurethanes, or poly-α-olefins, preferably polyethers or polyurethanes, or copolymers of at least two of said polymers.

8. The curable composition according to any one of claims 1 to 7, wherein the divalent linking group X in the general formula (II) is selected from -O-, -S-, -N(R")-, -R‴-O-, a substituted or unsubstituted amide, carbamate, urethane, urea, imino, carboxylate, carbamoyl, amidino, carbonate, sulfonate or sulfinate group, preferably selected from the group consisting of -O-C(=O)-N(R")-, -N(R")-C(=O)O-, - N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, -N(R")- and -R‴-O-,
wherein R" is a hydrogen or a linear or branched and substituted or unsubstituted hydrocarbon residue having 1 to 12 carbon atoms; and R‴ is a linear or branched and substituted or unsubstituted hydrocarbon residue having 1 to 12 carbon atoms.

9. The curable composition according to any one of claims 1 to 8, wherein
R in the general formula (II) is selected from divalent hydrocarbon residues having 1 to 6 carbon atoms, preferably a methylene, ethylene, or n-propylene, more preferably a methylene or n-propylene; and/or
each R^{a} in the general formula (II) is, independently of one another, selected from C₁ to C₈ alkyl groups, preferably a methyl or an ethyl; and/or
each R^{b} in the general formula (II) is, independently of one another, selected from a hydroxyl group, alkoxy group, acyloxy group, oximo group, or lactato group, preferably selected from C₁ to C₈ alkoxy groups, C₁ to C₈ acyloxy groups, or C₁ to C₈ oximo groups; and/or
k is 0 or 1.

10. The curable composition according to any one of claims 1 to 9, wherein the composition comprises about 0.1 to 10 % by weight, preferably about 0.1 to 5 % by weight, more preferably about 0.5 to 2 % by weight, of the polymer (B) based on the total weight of the composition.

11. The curable composition according to any one of claims 1 to 10, wherein the curing catalyst (C) is selected from tin catalysts, titanium catalysts, aluminum catalysts, or zirconium catalysts, or mixtures thereof.

12. The curable composition according to any one of claims 1 to 11, wherein the curable composition further comprises (D) at least one adhesion promoter, preferably the adhesion promoter comprises at least one compound selected from:
(i) aminosilanes, optionally oligomerized together with alkyl-, alkenyl- or aryl-alkoxysilanes;
(ii) oligomers obtained from the condensation of aminosilanes, optionally oligomerized together with alkyl-, alkenyl- or aryl-alkoxysilanes; or
(iii) mixtures thereof.

13. The curable composition according to any one of claims 1 to 12, wherein
(i) the amount of the polyorganosiloxane (A) is from about 15 to about 90 % by weight, preferably 20 to 70 % by weight, based on the total weight of the composition; and/or
(ii) the amount of the polymer (B) is from about 0.1 to about 10 % by weight, preferably 0.1 to 5 % by weight, more preferably about 0.5 to 2 % by weight, based on the total weight of the composition; and/or
(iii) the amount of the curing catalyst (C) is 0 to about 2 % by weight, preferably 0.001 to 2 % by weight, based on the total weight of the composition; and/or
(iv) the amount of the adhesion promoter (D) is 0 to about 5 % by weight, preferably 0.01 to 5 % by weight, based on the total weight of the composition.

14. An adhesive, sealant, or coating material comprising the curable composition according to any one of claims 1 to 13.

15. Use of a curable composition according to any one of claims 1 to 13 as an adhesive, sealant, or coating material.
